# EUROPÄISCHE PATENTANMELDUNG

(11) **EP 1 234 494 A1**
(43) Veröffentlichungstag der Anmeldung: **28.08.2002**
(21) Anmeldenummer: 02003496.3
(22) Anmeldetag: 15.02.2002
(51) Int. Cl.: A01D 45/02

(54) **Maschine zum Mähen von stängelartigem Erntegut**

(30) Priorität: 22.02.2001 DE 10108516
(71) Anmelder: Maschinenfabrik Kemper GmbH & Co. KG, 48703 Stadtlohn (DE)
(72) Erfinder: Wübbels, Richard, 46414 Rhede (DE); Wolters, Norbert, 48712 Gescher (DE)
(74) Vertreter: Holst, Sönke, Dr.

(57) **Zusammenfassung**

Die Erfindung bezieht sich auf eine Maschine (10) zum Mähen von stängelartigem Erntegut, mit mehreren seitlich nebeneinander angeordneten Einzugs- und Mäheinrichtungen (12) zum Abschneiden und Fördern des Ernteguts, an deren Rückseite ein Querförderkanal (22) vorgesehen ist, durch den das abgeschnittene Erntegut zumindest näherungsweise quer zur Vorwärtsfahrtrichtung transportierbar ist, wobei am stromab liegenden Ende des Querförderkanals (22) ein Einzugskanal (28) angeordnet ist, durch den das Erntegut einer Häckseleinrichtung (46) aufgebbar ist.

Um zu vermeiden, dass sich vor dem Einzugskanal (28) durch aus dem Querförderkanal ragende Pflanzen ein Gutstau bildet, wird vorgeschlagen, dass ein Umlenkelement (36) vor dem Einzugskanal (28) und oberhalb des Querförderkanals (22) angeordnet und eingerichtet ist, aus dem Querförderkanal (22) hinausragende Pflanzen nach unten und/oder hinten umzulenken.

## Beschreibung

Die Erfindung betrifft eine Maschine zum' Mähen von stängelartigem Erntegut, mit mehreren seitlich nebeneinander angeordneten Einzugs- und Mäheinrichtungen zum Abschneiden und Fördern des Ernteguts, an deren Rückseite ein Querförderkanal vorgesehen ist, durch den das abgeschnittene Erntegut zumindest näherungsweise quer zur Vorwärtsfahrtrichtung transportierbar ist, wobei am stromab liegenden Ende des Querförderkanals ein Einzugskanal angeordnet ist, durch den das Erntegut einer Häckseleinrichtung aufgebbar ist.

Bei bekannten Maschinen zum Mähen von stängelartigen Erntegut (DE 195 31 918 A), die mehrere seitlich nebeneinander angeordnete Mäh- und Einzugstrommeln aufweisen, wird das von äußeren Mäh- und Einzugstrommeln abgeerntete Gut zunächst an der Rückseite der Maschine in einem Querförderkanal seitlich transportiert und dann mittels um eine etwa vertikale Achse rotierender Schrägfördertrommeln in einen Einzugskanal eingeführt, also um 90° entgegen der Fahrtrichtung nach hinten abgelenkt. Durch den Einzugskanal erreicht das Erntegut die Vorpresswalzen und die Häckseltrommel eines Feldhäckslers.

Die DE 37 12 507 A offenbart ebenfalls eine Mähvorrichtung, bei der das Erntegut gemäht und dann quer zur Fahrtrichtung gefördert wird. Um vertikale Achsen rotierende Abstreifwalzen führen das Erntegut den Einzugswalzen im Einzugskanals eines Feldhäckslers zu.

In der DE 196 27 872 A ist ein Vorsatzgerät für einen Feldhäcksler beschrieben, bei dem eine um eine horizontale Achse rotativ angetriebene Förderwalze den Einzugswalzen im Einzugskanal des Feldhäckslers vorgeordnet ist. Die Förderwalze hebt die Erntegutstängel nach oben an und fördert sie in den Einzugskanal hinein. Die Förderwalze bewirkt nur eine Förderung des Ernteguts in der Vorwärtsbewegungsrichtung des Feldhäckslers.

Bei Maschinen zum Mähen von stängelartigen Erntegut, die das Erntegut in einem Querförderkanal transportieren, kommt es gelegentlich vor, dass die unteren Enden der geernteten Pflanzen - beispielsweise langer, grüner Mais - mit den unteren Enden aus dem Querförderkanal gelangen. Seitlich vor dem Einzugskanal sind Schrägfördertrommeln mit etwa vertikalen Drehachsen angeordnet, deren Aufgabe darin besteht, die Pflanzen nach hinten in den Einzugskanal zu fördern. Die Schrägfördertrommeln sind aber nicht in der Lage, die mit den unteren Enden aus dem Querförderkanal herausragenden Pflanzen zu erfassen. Die Pflanzen legen sich quer vor die Querfördertrommeln und blockieren dann den weiteren Gutfluss. Durch eine Verengung des Querförderkanals könnte man den Klemmeffekt zwar verbessern, man wird aber im normalen Betrieb, d. h. wenn über die gesamte Breite der Maschine Pflanzen einlaufen, Durchsatzprobleme bekommen.

Das der Erfindung zugrunde liegende Problem wird darin gesehen, die Gutförderung in einer Maschine zum Mähen von stängelartigen Erntegut zu verbessern.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung schlägt vor, ein Umlenkelement oberhalb des Querförderkanals vor und in Vorwärtsbewegungsrichtung der Maschine über dem Einzugskanal anzuordnen. Das Umlenkelement drückt eventuell aus dem Querförderkanal nach oben hinaus ragende Pflanzenteile nach unten und/oder entgegen der Vorwärtsbewegungsrichtung nach hinten. Auf diese Weise werden die aus dem Querförderkanal ragenden Pflanzenteile wieder in den Gutstrom eingefügt und von den entsprechenden Förderelementen in den Einzugskanal des Feldhäckslers verbracht. Ein Gutstau vor dem Einzugskanal ist nicht mehr zu befürchten.

Um aus dem Querförderkanal nach oben ragende Pflanzen mit einer nach unten wirkenden Kraft zu beaufschlagen, bietet sich an, die untere Oberfläche des Umlenkelements in seitlicher Richtung zu neigen, also gegenüber der Vertikalen und der Horizontalen schräg anzustellen. Es liegt, betrachtet man das Umlenkelement von hinten (d. h. in der Vorwärtsbewegungsrichtung), ein Keil oder eine schiefe Ebene vor, an der die nach oben aus dem Querförderkanal hinaus ragenden Pflanzen nach unten umgelenkt werden.

Besonders vorteilhaft ist es, wenn das Umlenkelement eingerichtet ist, aus dem Erntegutfluss nach oben hinausragende Pflanzenteile - insbesondere die Pflanzenenden - um 90° nach hinten in den Einzugskanal umzulenken, da dann die aus dem Erntegutfluss hinausragenden Pflanzen ohne Probleme in den Einzugskanal eingezogen werden. Zu diesem Zweck kann das Umlenkelement eine Oberfläche aufweisen, die mit der Vorwärtsbewegungsrichtung einen Winkel einschließt. Von oben betrachtet ergibt sich ebenfalls eine schiefe Ebene, an der die Pflanzen nach hinten umgelenkt werden.

Zur Vermeidung unerwünschter Reibung zwischen dem Erntegut und dem Umlenkelement kann das Umlenkelement beweglich gestaltet werden. Es ist vorzugsweise drehbar gelagert. Dadurch erreicht man die zur Vermeidung der Reibung zwischen dem Erntegut und dem Umlenkelement zweckmäßige Beweglichkeit auf technisch einfachem Weg. Es wäre aber auch denkbar, ein endloses Umlenkelement nach Art eines Fördergurts um zwei Umlenkrollen umlaufen zu lassen. Das Umlenkelement ist vorzugsweise frei drehbar, so dass ein entsprechender Antrieb unnötig ist. Möglich wäre aber auch, es rotativ anzutreiben. Die Drehachse des Umlenkelements ist zweckmäßigerweise horizontal und quer zur Vorwärtsbewegungsrichtung der Maschine angeordnet. Dadurch erleichtert das Umlenkelement eine Bewegung des Ernteguts nach hinten, in den Einzugskanal des Feldhäckslers, und unterbindet gleichzeitig eine an der Anbringungsstelle des Umlenkelements (nämlich vor dem Einzugskanal) unerwünschte Querbewegung des Ernteguts.

Als zum Umlenken der aus dem Querförderkanal hinaus ragenden Pflanzen nach unten und gleichzeitig nach hinten geeignetes starres Umlenkelement ist insbesondere ein Körper mit dreieckförmigem Querschnitt zu erwähnen, z. B. eine Pyramide mit nach unten gerichteter Spitze. Als drehbares Umlenkelement ist ein Rotationskörper mit dem Querschnitt eines Dreiecks oder Rhombus bevorzugt, wobei die Drehung um eine Symmetrieachse erfolgt. Ein Dreieck kann den aus einer seitlichen Richtung eintreffenden Gutfluss umlenken, während zwei zur Längsmittelebene der Maschine spiegelsymmetrisch angeordnete Dreiecke oder ein Rhombus mit dem von links und rechts eintreffenden Gutfluss zusammenwirken können. Das Dreieck und der Rhombus können auch konkav oder konvex gewölbte Oberflächen aufweisen.

Um eine optimale Umlenkung der aus dem Querförderkanal hinaus ragenden Pflanzen nach hinten zu erreichen, bietet es sich an, die Rotationsachse des Umlenkelements vor den Querförderkanal zu setzen.

Obwohl denkbar wäre, das Umlenkelement starr an der Maschine zu befestigen, so dass es nur dann eine Kraft auf den Erntegutfluss ausübt, wenn eine bestimmte Flussintensität überschritten ist, ist bevorzugt, es nach unten vorzuspannen. Die Vorspannung kann durch eine Feder oder ein Gewicht erzeugt werden, dass eine Halterung des Umlenkelements mit einem nach unten gerichteten Drehmoment oder einer entsprechenden Kraft beaufschlagt. Man erreicht dadurch, dass das Umlenkelement unabhängig von der Flussdichte des Ernteguts mit dem Erntegutstrom zusammenwirkt. Außerdem wird das Erntegut zusammengepresst, was die Förderung erleichtert. Dabei wäre ein unterer und/oder oberer Anschlag, der einen möglichen Bewegungsbereich des Umlenkelements festlegt, denkbar.

Schließlich ist vorgeschlagen, dass sich wenigstens ein Teilbereich des Umlenkelements zwischen zwei Schrägfördertrommeln erstreckt, die um etwa vertikale Achsen rotieren und stromauf des Einzugskanals angeordnet sind. Dadurch kann das Umlenkelement die Pflanzenenden den Schrägfördertrommeln zuführen, welche die Pflanzen in den Einzugskanal fördern.

In den Zeichnungen ist ein nachfolgend näher beschriebenes Ausführungsbeispiel der Erfindung dargestellt. Es zeigt:

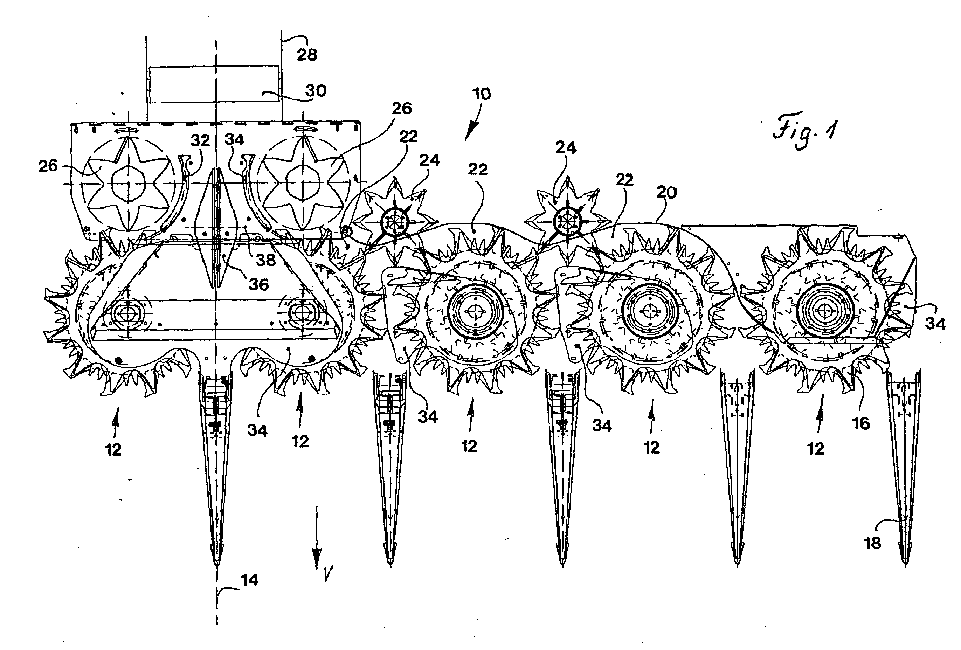

- Fig. 1: eine Draufsicht auf eine erfindungsgemäße Maschine zum Mähen von stängelartigem Erntegut,
- Fig. 2: einen Ausschnitt einer Frontansicht der Maschine,
- Fig. 3: eine schematische Seitenansicht der Maschine.

Die in Figur dargestellte Maschine 10 zum Mähen von stängelartigem Erntegut weist eine Reihe von Einzugs- und Mäheinrichtungen 12 auf, die symmetrisch zu einer Längsmittelebene 14 der Maschine 10 angeordnet sind. Links der Längsmittelebene 14 ist aus Gründen der Übersichtlichkeit nur eine Einzugs- und Mäheinrichtung 12 eingezeichnet, es sind jedoch auf beiden Seiten der Längsmittelebene 14 gleich viele Einzugs- und Mäheinrichtungen 12 vorhanden. Die Einzugs- und Mäheinrichtungen sind aus einer (nicht eingezeichneten) unteren Schneidscheibe, die um eine vertikale Achse rotiert, und koaxial darüber angeordneten Förderscheiben 16 zusammengesetzt, deren Umfang mit taschenförmigen Aussparungen ausgestattet ist. Den Einzugs- und Mäheinrichtungen 12 sind Halmteiler 18 vorgeordnet. Zwischen der Rückseite der Einzugs- und Mäheinrichtungen 12 und einer Rückwand 20 der Maschine 10 ist ein Querförderkanal 22 gebildet, durch den das von den Einzugs- und Mäheinrichtungen 12 abgeerntete Gut seitlich zur Mitte der Maschine 10 transportiert wird. Der seitliche Transport im Querförderkanal wird durch um vertikale Achsen rotativ angetriebene Förderscheiben 24 unterstützt, die Schlitze in der Rückwand 20 durchgreifen. In Vorwärtsbewegungsrichtung V hinter den beiden mittleren Einzugsund Mäheinrichtungen 12 sind Schrägfördertrommeln 26 mit nach vorn geneigten Drehachsen angeordnet, die das Erntegut aus dem Querförderkanal 22 nach hinten in einen Einzugskanal 28 eines Feldhäckslers mit darin übereinander angeordneten Einzugswalzen 30 fördern. Das Umlenken des Ernteguts nach hinten wird durch bogenförmige Umlenkkufen 32, die am Boden der Maschine 10 zwischen den Schrägfördertrommeln 26 angeordnet sind, erleichtert. Die vorderen Enden der Umlenkkufen 32 wirken auch als Ausräumer auf die mittleren Einzugs- und Mäheinrichtungen 12. Die Einzugs- und Mäheinrichtungen 12 sind mit flachen Abdeckungen 34 versehen.

Beim Erntevorgang wird die Maschine 10 am Einzugskanal 28 eines Feldhäckslers befestigt und in Vorwärtsbewegungsrichtung V über ein Feld bewegt. Das gegebenenfalls von Halmteilern 18 seitlich abgelenkte stängelartige Erntegut wird von den Einzugs- und Mäheinrichtungen 12 abgeschnitten und in den Querförderkanal 22 hineingefördert. Durch die Förderwirkung der Rückseiten der stromab folgenden Einzugs- und Mäheinrichtungen 12 und der Förderscheiben 24 erreicht das Erntegut die Rückseite der beiden mittleren Einzugs- und Mäheinrichtungen 12, wo es durch die Umlenkkufen 32 nach hinten umgelenkt wird. Die Schrägfördertrommeln 26 führen das Erntegut den Einzugswalzen 30 des Feldhäckslers zu, wo es gehäckselt und auf einem Wagen abgelegt wird.

Falls problematisches Erntegut, wie beispielsweise langer, grüner Mais geerntet wird, können sich Pflanzen mit ihren Fußenden aus dem Querförderkanal 22 ziehen und dann in der Mitte an den Schrägfördertrommeln 26 vorbeischießen. Dadurch verstopft die Maschine 10, so dass eine Bedienungsperson aus der Kabine des Feldhäckslers heraussteigen und den Stau beseitigen muss. Dadurch entstehen unerwünschte Zeitverluste. Zur Lösung dieses Problems ist in Vorwärtsbewegungsrichtung V vor dem Einzugskanal 28 und über dem Querförderkanal 22 der Maschine 10 ein Umlenkelement 36 angeordnet, das zwei spiegelsymmetrisch zur Längsmittelebene 14 angeordnete Walzen mit dreieckförmigem Querschnitt umfasst, die um eine horizontale, quer zur Vorwärtsbewegungsrichtung V verlaufende Achse 38 frei drehbar gelagert (d. h. ohne Antrieb) sind. Die Oberflächen der Walzen des Umlenkelements 36 sind derart angeordnet, dass die Fußenden der aus dem Querförderkanal 22 ragenden Pflanzen hinter der Achse 38 auf sie prallen. Wegen der an diesen Stellen nach unten und hinten geneigten Oberfläche werden die Pflanzen nach hinten und unten zur jeweils benachbarten Schrägfördertrommel 26 umgelenkt. Die Pflanzen werden somit zwischen dem Umlenkelement 36 und der Schrägfördertrommel 26 eingeklemmt und in den Einzugskanal 28 gefördert.

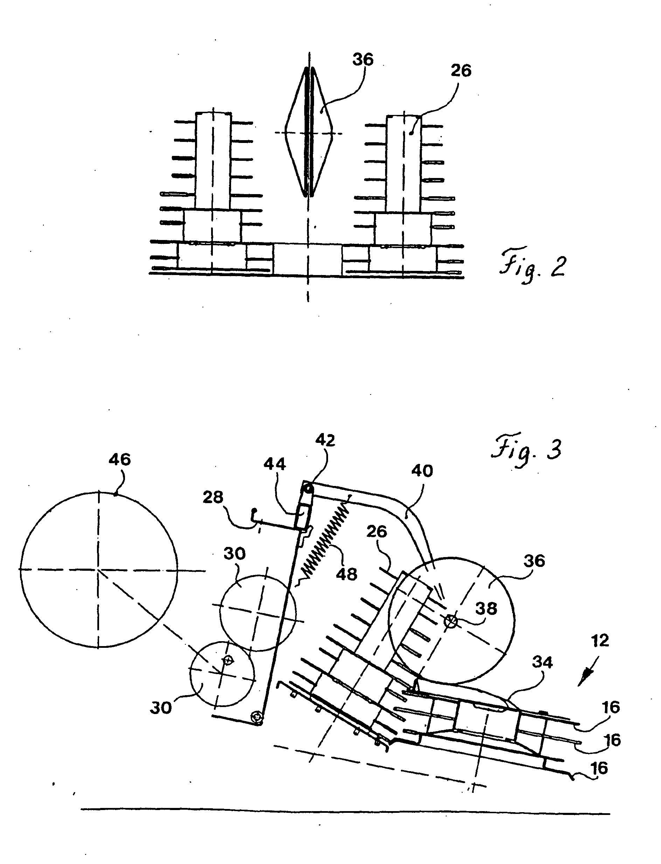

Die Anordnung des Umlenkelements 36 relativ zu den Schrägfördertrommeln 26 ist in der Frontansicht der Figur 2 erkennbar. Die aus dem Querförderkanal 22 ragenden Pflanzen werden durch die jeweils hinteren, unteren Oberflächen des Umlenkelements 36 nach hinten und unten umgelenkt.

Die Seitenansicht der Figur 3 zeigt die Aufhängung des Umlenkelements 36. Die Achse 38 stützt sich an einem Arm 40 ab, der an seinem anderen Ende mittels einer horizontalen, quer zur Vorwärtsbewegungsrichtung V orientierten Achse 42 an einem Rahmenelement 44 der Maschine 10 schwenkbar gelagert ist. Das Rahmenelement 44 stützt sich am Einzugskanal 28 des Feldhäckslers ab, dessen Häckseltrommel 46 in Figur 3 schematisch angedeutet ist. Der um die Achse 42 schwenkbare Arm 40 wird durch eine an der Maschine 10 angelenkte Schraubenfeder 48 nach unten vorgespannt. Die Schraubenfeder 48 erzeugt somit ein Drehmoment, das das Umlenkelement 36 nach unten drückt. In der Ruhestellung, d. h. wenn keine Pflanzen eingezogen werden, liegt das Umlenkelement auf der Abdeckung 34 der mittleren Einzugsund Mäheinrichtungen 12 auf. Sobald jedoch von einer oder beiden Seiten Erntegut im Querförderkanal 22 gefördert wird, wird das Umlenkelement 36 gegen das von der Schraubenfeder 48 erzeugte Drehmoment nach oben gedrückt und sorgt für eine Vorpressung des Ernteguts zwischen den beiden Schrägfördertrommeln 26. Das Umlenkelement 36 dreht sich mit dem geförderten Erntegut frei mit. Dabei entsteht keine zusätzliche Reibung.

Im Ergebnis ist die Gutförderung der erfindungsgemäßen Maschine 10 wesentlich verbessert. Die Pflanzen werden zwischen dem Umlenkelement 36 und den Schrägfördertrommeln 26 eingeklemmt und durch letztere ohne Probleme in den Einzugskanal 28 transportiert.

Die Oberfläche des Umlenkelements 36 kann mit Mitnehmern ausgestattet werden, außerdem oder zusätzlich können auch noch zackenförmige Mitnehmer um den Umfang des Umlenkelements 36 verteilt werden. Dadurch erreicht man, insbesondere bei feuchtem Erntegut, dass das Umlenkelement 36 stets durch das Erntegut zum Drehen gebracht wird.

## Patentansprüche

1. Maschine (10) zum Mähen von stängelartigem Erntegut, mit mehreren seitlich nebeneinander angeordneten Einzugs- und Mäheinrichtungen (12) zum Abschneiden und Fördern des Ernteguts, an deren Rückseite ein Querförderkanal (22) vorgesehen ist, durch den das abgeschnittene Erntegut zumindest näherungsweise quer zur Vorwärtsfahrtrichtung transportierbar ist, wobei am stromab liegenden Ende des Querförderkanals (22) ein Einzugskanal (28) angeordnet ist, durch den das Erntegut einer Häckseleinrichtung (46) aufgebbar ist, **dadurch gekennzeichnet, dass** ein Umlenkelement (36) vor dem Einzugskanal (28) und oberhalb des Querförderkanals (22) angeordnet und eingerichtet ist, aus dem Querförderkanal (22) hinausragende Pflanzen nach unten und/oder hinten umzulenken.

2. Maschine (10) nach Anspruch 1, **dadurch gekennzeichnet, dass** das Umlenkelement (36) eine mit der Vertikalen einen Winkel einschließende untere Oberfläche aufweist.

3. Maschine (10) nach Anspruch 1 oder 2, **dadurch gekennzeichnet, dass dadurch gekennzeichnet, dass** das Umlenkelement (36) eine mit der Vorwärtsbewegungsrichtung (V) einen Winkel einschließende Oberfläche aufweist.

4. Maschine (10) nach einem der Ansprüche 1 bis 3, **dadurch gekennzeichnet, dass** das Umlenkelement (36) beweglich, insbesondere drehbar ist.

5. Maschine (10) nach Anspruch 4, **dadurch gekennzeichnet, dass** das Umlenkelement (36) frei drehbar ist.

6. Maschine (10) nach Anspruch 4 oder 5, **dadurch gekennzeichnet, dass** das Umlenkelement (36) eine horizontale, quer zur Vorwärtsbewegungsrichtung verlaufende Rotationsachse (38) aufweist.

7. Maschine (10) nach einem der Ansprüche 1 bis 6, **dadurch gekennzeichnet, dass** das Umlenkelement (36) eine in Vorwärtsbewegungsrichtung (V) vor dem Erntegutstrom angeordnete Rotationsachse (38) aufweist.

8. Maschine (10) nach einem der Ansprüche 1 bis 7, **dadurch gekennzeichnet, dass** das Umlenkelement (36) einen dreieck- oder rhombus-förmigen Querschnitt hat.

9. Maschine (10) nach einem der Ansprüche 1 bis 8, **dadurch gekennzeichnet, dass** das Umlenkelement (36) nach unten vorgespannt ist.

10. Maschine (10) nach einem der Ansprüche 1 bis 9, **dadurch gekennzeichnet, dass** stromauf des Einzugskanals (28) zwei um etwa vertikale Achsen rotierende Schrägfördertrommeln (26) angeordnet sind, wobei sich wenigstens ein Teilbereich des Umlenkelements (36) zwischen den Schrägfördertrommeln (26) erstreckt.
